# FASCICULE DE BREVET EUROPEEN

(11) **EP 1 438 172 B1**
(45) Date de publication et mention de la délivrance du brevet: **17.09.2008**
(21) Numéro de dépôt: 02799427.6
(22) Date de dépôt: 25.09.2002
(51) Int. Cl.: B29C 45/14, H05B 3/86, B60S 1/02

(54) **PROCEDE POUR FABRIQUER UNE VITRE EN MATIERE PLASTIQUE AVEC UNE STRUCTURE DE CONDUCTEURS ELECTRIQUES ET VITRE EN MATIERE PLASTIQUE AVEC FILS NOYES**
VERFAHREN ZUR HERSTELLUNG EINER KUNSTSTOFFSCHEIBE MIT ELEKTRISCHER LEITUNGSSTRUKTUR UND KUNSTSTOFFSCHEIBE MIT EINGEBETTETEN DRÄHTEN
METHOD FOR MAKING A PLASTIC PANE WITH ELECTRICAL CONDUCTOR STRUCTURE AND PLASTIC PANE WITH EMBEDDED WIRES

(30) Priorité: 26.09.2001 DE 10147537
(43) Date de publication de la demande: 21.07.2004
(73) Titulaire: Freeglass GmbH & Co. Kg, 71409 Schwaikheim (DE)
(72) Inventeur: AENGENHEYSTER, Gerald, 71642 Ludwigsburg (DE); BLANCHE, Luc-Henry, 71409 Schwaikheim (DE)
(74) Mandataire: Colombier, Christian
(86) Numéro de dépôt international: PCT/FR2002/003266
(87) Numéro de publication internationale: WO 2003/026869

(56) Documents cités:
- US-A- 5 830 397
- US-A- 6 024 904
- PATENT ABSTRACTS OF JAPAN vol. 18, no. 502 (M-1676), 20 septembre 1994 (1994-09-20) -& JP 06 170883 A (MAZDA MOTOR CORP), 21 juin 1994 (1994-06-21)
- PATENT ABSTRACTS OF JAPAN vol. 18, no. 585 (M-1700), 9 novembre 1994 (1994-11-09) -& JP 06 218764 A (NIPPON SHEET GLASS CO LTD), 9 août 1994 (1994-08-09) -& DATABASE WPI Week 199436 Derwent Publications Ltd., London, GB; AN 1994-290420 XP002230227 & JP 06 218764 A
- PATENT ABSTRACTS OF JAPAN vol. 18, no. 502 (M-1676), 20 septembre 1994 (1994-09-20) -& JP 06 170884 A (MAZDA MOTOR CORP), 21 juin 1994 (1994-06-21)

## Description

L'invention se rapporte à un procédé pour fabriquer une vitre en matière plastique pourvue d'une structure de conducteurs électriques noyés, présentant les caractéristiques du préambule de la revendication 1 ainsi qu'à une vitre en matière plastique correspondante suivant la revendication indépendante 14.

Dans la construction automobile, on réduit sans cesse les poids des carrosseries. Ainsi par exemple, les vitres de verre sont remplacées par des vitres en matières plastiques, de préférence en polycarbonates (PC) ou en polyméthylméthacrylate (PMMA). Il existe aussi déjà des composites hybrides en vitres de verre et de matière plastique. En particulier, on recherche des solutions, pour remplacer aussi des vitres de verre pourvues de fils de chauffage ou d'antenne incorporés par des vitres en matières plastiques.

Le brevet US-A-5.525.401 décrit un procédé pertinent et une fenêtre de véhicule en matière plastique, dans lesquels, lors de la fabrication de celle-ci, on dépose par sérigraphie une structure électriquement conductrice sur une surface d'un mince film de matière plastique initialement plan. Après le durcissement du motif de sérigraphie, qui peut également comprendre une bande périphérique opaque en forme de cadre, le film imprimé peut être déposé dans un moule de moulage par injection, dans lequel il peut prendre une forme spatiale incurvée. Alors, sa face imprimée est assemblée à un substrat en matière plastique, qui est injecté dans le moule. Dans le produit fini, la structure conductrice est enfermée entre le film et le corps de la vitre et est protégée contre tout dommage.

Sur le marché, on ne dispose cependant pas de pâtes de sérigraphie applicables en production industrielle sur des surfaces de matière plastique, et qui présentent une bonne conductibilité électrique du niveau nécessaire pour le chauffage. En outre, les structures de conducteurs réalisables par la sérigraphie conventionnelle sont visuellement très apparentes si on les compare aux faibles épaisseurs de fils de chauffage disponibles.

La demande DE-A1-199 27 999 décrit une vitre feuilletée en matière plastique composée de deux films de PC relativement minces situés à l'extérieur et d'une couche de remplissage ("corps de la vitre"), également en PC, assemblant ceux-ci l'un à l'autre. Un revêtement électrique conducteur est imprimé sur la face intérieure d'un des deux films. Pour réaliser un raccordement électrique extérieur de la couche conductrice, le film concerné est traversé par un contact à fiche saillant vers l'extérieur, qui est en contact électrique intérieurement avec la couche. Les faces extérieures des deux films sont pourvues de revêtements anti-griffes.

Des procedés similaires sont décrits dans les documents US-A-6 024 904 et US-A-5 830 397.

La demande DE-A1-35 06 011 décrit un procédé pour fabriquer une vitre en matière plastique à chauffage électrique, dans laquelle de fins fils sont laminés ou pressés dans la surface d'un corps de vitre préfabriqué et cette surface est ensuite à nouveau lissée par pressage. La matière du corps de vitre doit enrober entièrement les fils de chauffage. Enfin, on colle sur les deux faces du corps de vitre d'environ 1 mm d'épaisseur des feuilles de recouvrement en polyuréthanne réticulé d'environ 0,3 mm d'épaisseur à l'aide de couches de colle polyuréthanne thermoplastiques. Les propriétés d'auto-cicatrisation de celles-ci améliorent la résistance à l'usure et aux griffures des faces extérieures de la vitre. Pour la mise en contact électrique des fils noyés dans la couche de noyau, il est prévu des bandes métalliques minces.

La demande EP-A1-7 857 divulgue une vitre feuilletée transparente pourvue d'une trame de fils électriquement conductrice, qui est lamellée essentiellement à partir d'une vitre rigide en verre ou en matière plastique (PC ou PMMA) et d'une ébauche lamellée relativement mince composée d'une feuille externe mécaniquement résistante et d'une feuille intermédiaire thermoplastique adhésive garnie des fils appliqués ou incorporés. La vitre feuilletée terminée est utilisable principalement comme vitre chauffante de véhicule. Sa feuille externe est de préférence fabriquée en un polyuréthanne durcissant à la chaleur d'une épaisseur d'environ 0,5 mm, sa surface présentant des propriétés d'auto-cicatrisation en présence d'actions mécaniques. La feuille intermédiaire est au contraire fabriquée en un polyuréthanne thermoplastique avec une épaisseur d'environ 0,05 mm seulement. Les fils sont appliqués après la fabrication de l'ébauche lamellée sur la face libre de la feuille intermédiaire. Ensuite, l'ébauche lamellée est assemblée par collage avec la vitre rigide en verre ou en matière plastique (PC, PMMA) par calandrage et éventuellement séjour ultérieur dans un autoclave.

On connaît en outre par le brevet DE-C2-42 01 620 un dispositif pour déposer des fils minces sur une feuille de matière plastique, qui est prévue pour être insérée dans une vitre feuilletée, et qui en particulier forme elle-même la feuille adhésive pour l'assemblage en surface de deux vitres de verre. De telles vitres feuilletées sont utilisées dans des véhicules modernes, comme vitres de chauffage et/ou d'antenne, dans lesquelles les fils doivent chaque fois être électriquement reliés à des raccords extérieurs.

Un autre cas d'application de vitres transparentes avec des fils noyés est décrit dans le brevet DE-C2-42 27 032. Le vitrage de fenêtres de bâtiments décrit ici comprend de fins fils métalliques parallèles logés dans une vitre multiple, sur lesquels se réfléchissent des rayonnements radar. Cette application ne nécessite aucun raccord électrique extérieur.

La présente invention a pour objet de révéler un autre procédé pour fabriquer une vitre en matière plastique avec une structure de conducteurs noyée ainsi qu'une vitre en matière plastique, qui peut être fabriquée en particulier par le procédé.

Conformément à l'invention, cet objectif est atteint, en ce qui concerne le procédé, par les caractéristiques de la revendication 1. Les caractéristiques de la revendication 14 présentent une vitre correspondante en matière plastique. Les caractéristiques des revendications secondaires respectivement subordonnées aux revendications indépendantes indiquent des perfectionnements avantageux de ces objets.

Au moins un fil ou une pluralité de fils sont ainsi appliqués directement sur une telle feuille de matière plastique relativement mince et solide ou intégrés dans la surface de celle-ci, dont la surface située à l'opposé des fils forme une des faces extérieures de la vitre terminée. Une structure de conducteurs suivant la présente invention peut aussi être produite en posant un fil individuel suivant une disposition, respectivement une trame de fils, prédéterminée, par exemple en boucles, méandres et analogues. Naturellement, on peut aussi, pour réaliser une trame comportant plusieurs tronçons parallèles, poser sur la face de la feuille un fil d'abord sinueux avec des courbes de jonction situées à l'extérieur ou à l'intérieur de la face de la feuille et ensuite couper les courbes de jonction, pour relier ensuite les extrémités des fils par un montage en parallèle à l'aide de barrettes collectrices.

La face de la feuille, garnie du ou des fil(s), est ensuite soumise à une injection par l'arrière, dans un moule, avec la masse formant le corps de vitre. Une couche de colle séparée entre la feuille et le corps de vitre est supprimée. Naturellement, on combine toujours des matières plastiques, qui se lient étroitement et durablement l'une à l'autre lors de l'injection du corps de vitre. De préférence, aussi bien la feuille que la matière additionnelle pour le corps de vitre sont constituées de polycarbonate. La feuille et le corps de vitre peuvent cependant ne pas être constitués de la même matière. On peut en outre utiliser du PMMA et d'autres matériaux appropriés et éventuellement combiner ceux-ci, dans la mesure où les matériaux de la feuille et du corps de vitre sont compatibles, donc qu'ils peuvent être liés solidement et durablement l'un à l'autre par l'opération d'injection. Dans le cas optimal, la fusion de surface de la masse injectée à l'arrière avec la feuille donne naissance à un composite pratiquement homogène à partir de la feuille et du corps de vitre.

Comme dans d'autres vitres avec des fils incorporés, ceux-ci peuvent également, dans les vitres décrites ici, servir de résistances de chauffage, de conducteurs d'antenne, de conducteurs pour une boucle d'alarme en cas de bris et/ou aussi à des fins de blindage ou de décoration.

L'étendue de la face garnie de fils dans le produit fini (donc éventuellement chauffante ou servant d'antenne) peut être déterminée librement. On peut par exemple - hormis une pose sur toute la surface - ne garnir qu'une partie de la surface de la feuille avec des fils. En outre, sur une seule et même feuille, différents "champs fonctionnels" (chauffage, antenne, etc.) peuvent être garnis de fils, qui ne doivent pas absolument être raccordés électriquement les uns aux autres, mais qui peuvent être reliés électriquement vers l'extérieur séparément l'un de l'autre, selon les besoins.

On peut même employer une surface de feuille plus petite que la surface totale de la vitre. Ladite surface totale n'est alors déterminée que par le corps de vitre, qui s'étend sur au moins un côté au-delà de la feuille, respectivement forme un prolongement lisse de la face extérieure de la feuille. Des transitions de la feuille au corps de vitre dans la face extérieure de la vitre sont à peine perceptibles visuellement, même dans des prototypes, par suite de la fusion de la matière injectée par l'arrière à chaud sous haute pression avec la feuille, en particulier aussi avec son arête de coupe située dans la face. On pourrait aussi imaginer de prévoir deux ou plus de deux portions de feuille sur une seule et même face de la vitre. Le cas échéant, les champs fonctionnels différents précités peuvent ainsi être disposés sur des feuilles individuelles, qui sont assemblées par l'arrière à un corps de vitre commun par injection à l'arrière et sont situées dans la même face extérieure de la vitre terminée.

On peut découper pratiquement à volonté le contour de la portion de feuille, non seulement de forme polygonale, mais aussi ronde, elliptique, etc. En principe, une portion de feuille relativement petite pourrait être disposée au milieu de la face de la vitre. Compte tenu des raccordements électriques nécessaires, on posera de préférence au moins une partie de la surface jusqu'à proximité du périmètre extérieur de la vitre, si les raccords ne doivent pas être situés dans la face de la vitre. On peut aussi imaginer de ne pas couper un bord, respectivement une arête de feuille, suivant un tracé lisse, mais de lui donner une structure (par exemple en dents de scie, ondulée, irrégulière de type "ligne brisée"), si cela ne dégrade pas la surface lisse de la face extérieure de la feuille, et en même temps peut servir pour camoufler la transition vers le corps de vitre.

En outre, on peut aussi, par la technique décrite ici, garnir de fils deux feuilles de recouvrement et injecter le corps de vitre entre celles-ci. En l'occurrence, différentes zones de la surface de la vitre peuvent également être garnies de fils. Une telle vitre à chauffage sur les deux faces montée dans des véhicules pourrait par exemple servir aussi bien pour éliminer rapidement la buée sur la face intérieure que pour faire fondre la glace sur la face extérieure, ce dernier aspect étant surtout nécessaire dans la zone de repos des essuie-glaces. Particulièrement pour cette dernière disposition, il est recommandé de ne prévoir et de ne soumettre à une injection par l'arrière qu'une bande relativement étroite de feuille garnie de fils sur la face extérieure de la vitre, car dans cette région du bord de la vitre, la transition de la feuille au corps de vitre peut être recouverte, respectivement masquée, par exemple par un cadre coloré opaque. Le cadre coloré peut être disposé sur la même face de la vitre que ladite transition, ou bien sur la face opposée de la vitre, le cas échéant même sur la face de la feuille située à l'intérieur. Dans cette dernière variante, la matière du cadre coloré doit cependant être choisie de manière telle qu'elle puisse être assemblée sans difficultés à la masse de matière plastique injectée ultérieurement. Même avec un cadre coloré se terminant exactement à la transition, la transition est masquée de manière suffisante sur le plan visuel.

En général, la feuille peut être pourvue, sur sa face située plus tard à l'intérieur, d'un revêtement de protection contre la chaleur (réfléchissant les IR), en plus du garnissage de fils. S'il est prévu deux feuilles de recouvrement, une d'elles peut être garnie des fils et l'autre peut être dotée d'un revêtement de protection contre la chaleur.

Pour la pose des fils, on peut faire appel à un des procédés connus de pose de fils. De préférence, pour réaliser la disposition désirée de pose des fils, on se sert d'une tête de pose pilotée par un robot programmé, à guider au-dessus de la face de la feuille, qui imprime ou intègre les fils de façon continu dans la surface de la feuille sous une légère pression et avec un appoint de chaleur. Si les fils eux-mêmes sont chauffés, ils pénètrent alors aisément dans la feuille uniquement sous une très faible pression. Si l'on dispose d'une tête de pose à mouvement spatial, on peut alors poser les fils même sur la surface libre de la feuille, éventuellement incurvée en sphère, qui se trouve déjà dans le moule. Comme dans l'état de la technique, les fils peuvent aussi être posés en ligne droite, en arcs, sous forme d'ondulations, selon les besoins du dessin. Les fils disponibles ont une épaisseur comprise entre 5 et 500 µm avec une stabilité mécanique suffisante. La plupart du temps, les fils se composent de tungstène, mais on emploie aussi des fils d'autres matières. En raison de leur faible épaisseur, les fils ne sont pratiquement pas perceptibles visuellement dans la vitre montée, d'autant plus que la plupart du temps des réflexions et la dispersion de la lumière sont minimisées par un revêtement approprié.

Le cas échéant, on peut aussi noyer le ou les fil(s) dans la surface de la feuille en faisant appel à des ondes ultrasonores; la chaleur nécessaire, qui permet la pénétration des fils dans la surface de la feuille, est alors produite directement dans le matériau de la feuille.

Etant donné que la feuille est à nouveau chauffée dans le moule d'injection jusque dans le domaine plastique de la matière, le fil ou les fils peu(ven)t être posé(s) sur une portion de feuille plane, qui est amenée dans le moule à sa configuration de surface définitive. En variante, la portion de feuille pourrait aussi recevoir déjà sa forme intermédiaire ou définitive de façon thermique-plastique avant son introduction dans le moule d'injection, le cas échéant aussi avant la pose des fils.

De même, des barrettes dites "collectrices", avec lesquelles plusieurs fils placés parallèlement peuvent être mis en contact électrique en commun à proximité du bord de la vitre, doivent être posées sur la surface concernée et mises en liaison conductrice avec le fil ou les fils avant l'injection par l'arrière sur la feuille, comme cela est bien connu par l'état de la technique.

S'il faut prévoir pour les fils des raccords extérieurs, on peut préparer ceux-ci avant l'injection par l'arrière. On peut le cas échéant préparer des raccords à fiches, de façon connue en soi, qui sont également noyés lors de l'injection du corps de vitre. Ils restent accessibles de l'extérieur, de manière telle que des lignes électriques (d'alimentation et/ou d'antenne) puissent être ultérieurement mises en contact avec les fils noyés au moyen de fiches.

Dans une variante, on peut étendre le ou les fil (s) dans un moule d'injection adéquat uniquement sur une face plane ou courbe (convexe) de la feuille, auquel cas ils s'étendent au moins d'un côté sur la surface de feuille garnie, et les fixer par la matière injectée du corps de vitre, auquel cas ils pénétreront également dans la surface de la feuille au plus tard lors du chauffage du moule.

Le même effet peut être obtenu lorsque le fil ou les fils sont menés lors de la pose au-dessus de la face de la feuille à garnir et y sont fixés provisoirement par d'autres moyens. A cet effet, il est possible de découper une face de feuille d'abord plus grande que nécessaire en soi et d'enlever plus tard par des moyens appropriés les excédents de feuille non nécessaires, sans découper en même temps les tronçons de fil qui dépassent (extrémités libres, boucles). Ces options ne peuvent pas être réalisées en cas d'impression de motifs par sérigraphie.

En particulier, mais pas exclusivement dans les cas qui précèdent, les fils peuvent continuer à sortir vers l'extérieur hors de la vitre terminée (dans au moins une arête frontale), afin d'y être le cas échéant raccordés électriquement à l'extérieur de la face de la vitre.

Les fils intégrés ou appliqués sont dans tous les cas noyés entre la feuille et la matière injectée à l'arrière, ce qui conduit, par rapport aux solutions connues avec des fils noyés plus intérieurement, respectivement plus profondément, dans le lamellé, à l'avantage que les fils se trouvent à présent très près de la surface à chauffer de la feuille mince. On compense ainsi la mauvaise conductibilité thermique des matières plastiques utilisées, et on atteint de manière satisfaisante de courtes durées de chauffage.

Pour obtenir un chauffage superficiel aussi homogène que possible, on pose les fils à des distances relativement faibles. On minimise ainsi en même temps les hétérogénéités de l'allongement thermique de la matière plastique dans la face.

La feuille peut avoir une épaisseur comprise entre 0,1 et 1 mm ou davantage, de préférence entre 0,2 et 0,7 mm. L'épaisseur du corps de vitre sera comprise entre 1,5 et 8 mm, le cas échéant encore davantage, selon l'étendue superficielle du produit fini et l'application envisagée. Ses dimensions sont déterminées par la cavité du moule d'injection. Bien entendu, cette même cavité peut aussi convenir - de façon bien connue en soi - pour le façonnage direct d'autres accessoires de la vitre, par exemple des éléments de fixation, des lampes, etc., sur la masse injectée à l'arrière, respectivement sur le corps de vitre.

Les faces extérieures libres de la feuille et du corps de vitre sont, de façon usuelle, pourvues de revêtements anti-griffes; la feuille peut naturellement être revêtue de façon correspondante déjà avant la pose des fils, de préférence lorsqu'elle s'étend sur toute la face extérieure de la vitre.

D'autres détails et avantages de l'objet de l'invention résultent du dessin d'un exemple de réalisation et de sa description détaillée qui suit.

Dans les dessins, qui représentent de façon simplifiée et sans échelle particulière des fragments de vitres en matière plastique, la
- Fig. 1: illustre une première forme de réalisation, dans laquelle une feuille de recouvrement prévue sur une seule face est garnie de fils orientés parallèlement les uns aux autres; la
- Fig. 2: montre une deuxième forme de réalisation, dans laquelle deux feuilles de recouvrement sont garnies de fils dans des portions de surface différentes de part et d'autre du corps de vitre; et la
- Fig. 3: illustre une troisième forme de réalisation, dans laquelle une feuille est garnie de fils et une seconde feuille est pourvue d'un revêtement de protection contre la chaleur.

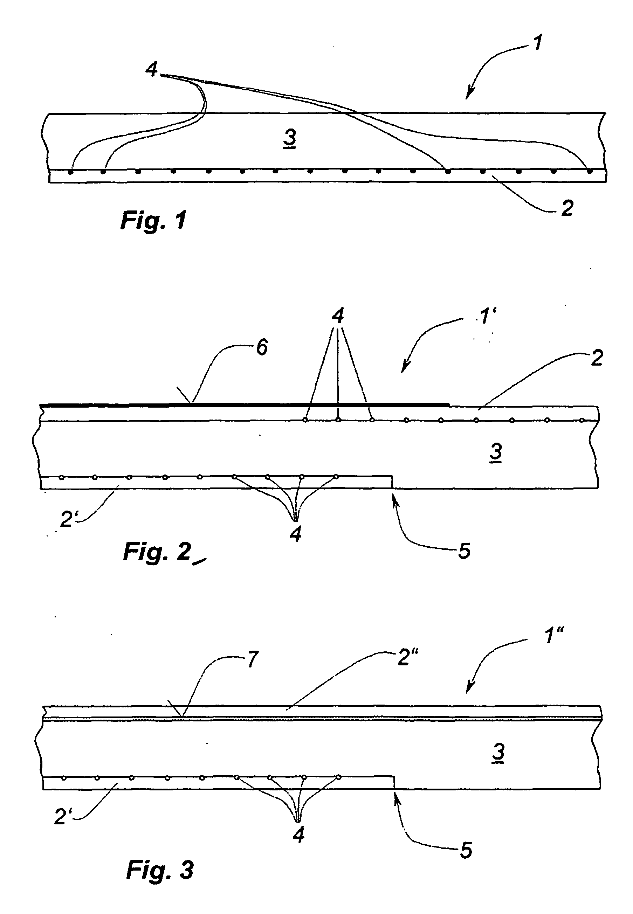

Une vitre en matière plastique 1 suivant la **figure 1** se compose essentiellement d'une mince feuille de matière plastique 2 et d'un corps de vitre 3 solidement et durablement assemblé à cette dernière par injection arrière dans un moule d'injection. L'interface, respectivement le joint d'assemblage, entre la feuille et le corps de vitre n'est montrée ici que dans un but d'illustration. Dans le produit réel, elle est à peine perceptible, parce que la matière du corps de vitre se fond dans la face de la feuille lors de l'injection arrière. Dans la surface de la feuille 2 orientée vers le joint d'assemblage sont insérés un certain nombre de fins fils 4 placés parallèlement l'un à l'autre à des distances relativement faibles. Ils sont entièrement noyés dans la matière de la feuille de matière plastique 2, sans percer la surface libre de celle-ci. Les fils 4 sont en réalité beaucoup plus fins que la feuille. La matière plastique injectée du corps de vitre 3 gomme toutes les inégalités de la face intérieure de la feuille. La feuille et le corps de vitre ont ici la même étendue superficielle. Un revêtement anti-griffes n'est pas représenté ici. Celui-ci peut être appliqué sur la face libre de la feuille déjà avant la pose des fils, mais sur le corps de vitre naturellement seulement après sa solidification avant ou après la reprise hors du moule d'injection.

On remarquera encore une fois que, dans les exemples de réalisation, il est certes toujours question d'une pluralité de fils, mais que l'on peut aussi réaliser une trame de fils avec un seul fil, avec des tronçons de fil orientés parallèlement comme cela est illustré.

Dans la vitre en matière plastique 1' représentée dans la **figure 2****,** les deux faces du corps de vitre 3 sont pourvues de feuilles 2 et 2', qui à leur tour présentent toutes deux des fils incorporés 4. Dans cette réalisation, les fils 4 ne sont pas entièrement noyés dans la matière des feuilles mais, dans le "joint d'assemblage" entre les feuilles et le corps de vitre formé par injection, ils pénètrent légèrement dans ce dernier. En outre, la feuille 2' est plus petite que la surface totale de la vitre, de sorte qu'à une transition 5, la surface du corps de vitre 3 se raccorde à plat à la surface de la feuille 2'. Sur l'autre face de la vitre 1', la feuille complète 2 n'est garnie de fils que sur une partie de sa face située à l'intérieur. Sur sa face extérieure, il est prévu un revêtement opaque 6 dans la zone dans laquelle se trouve la transition 5 et où les faces de la feuille garnies de fils se recouvrent. Le revêtement 6 masque ainsi visuellement ces zones dans le sens de la vision traversante.

Si une telle vitre est employée dans un véhicule, par exemple en guise de lunette arrière, la feuille plus petite 2' peut alors être placée sur la face située à l'extérieur à l'état monté, où ses fils 4 serviront de champ de chauffage pour le dégivrage d'une plage de repos pour les essuie-glaces. En même temps, les fils 4 de la feuille 2 située à l'intérieur forment le chauffage superficiel usuel pour l'élimination de la buée sur la face intérieure de la même vitre. Les champs de chauffage obtenus sont formés chaque fois à proximité de la surface à chauffer sélectivement, de façon à assurer un chauffage rapide des surfaces de la vitre.

En troisième variante, la **figure 3** montre la combinaison du corps de vitre 3 avec une feuille 2' garnie de fils 4 (comme dans la figure 2) et avec une seconde feuille de recouvrement 2" qui porte, de façon connue en soi, un revêtement transparent 7 sur toute la surface, protégeant contre la chaleur, en particulier réfléchissant les infrarouges, sur sa face tournée vers le corps de vitre. Ce dernier peut avoir non seulement la fonction passive précitée, mais aussi - de façon connue en soi - être employé comme chauffage de surface.

Dans tous les exemples de réalisation, il peut être prévu des raccords extérieurs suivant l'état de la technique connu, là où l'on en a besoin. On ne doit pas y revenir plus en détail ici, parce que les moyens correspondants peuvent être considérés comme connus.

## Revendications

1. Procédé pour fabriquer une vitre en matière plastique pourvue de conducteurs électriques noyés, en particulier d'une vitre de fenêtre, dans lequel les conducteurs sont associés à une surface d'une mince feuille de matière plastique (2;2';2"), qui reçoit ultérieurement une injection par l'arrière d'une autre couche de matière plastique en vue de former un corps de vitre (3), dans lequel la matière de la feuille de matière plastique et la matière plastique injectée sont directement assemblées matériellement l'une à l'autre, et dans lequel la surface de la feuille de matière plastique située à l'opposé des conducteurs forme une des faces extérieures de la vitre terminée, **caractérisé en ce que** les conducteurs électriques sont formés en garnissant la surface de la feuille de matière plastique à exposer à l'injection par l'arrière avec au moins un fil métallique (4).

2. Procédé suivant la revendication 1, **caractérisé en ce que** le ou les fils sont imprimés au moins en partie dans la surface de la feuille de matière plastique sous l'action de la chaleur.

3. Procédé suivant la revendication 1 ou 2, **caractérisé en ce que** le ou les fils sont appliqués ou étendus sur la surface de la feuille de matière plastique dans le moule d'injection.

4. Procédé suivant l'une quelconque des revendications précédentes, **caractérisé en ce que** l'on utilise une feuille de matière plastique thermoplastique d'une épaisseur comprise entre 0,1 et 1 mm.

5. Procédé suivant l'une quelconque des revendications précédentes, **caractérisé en ce que** l'on utilise une feuille de matière plastique thermoplastique en polycarbonate (PC) ou en polyméthylméthacrylate (PMM A).

6. Procédé suivant l'une quelconque des revendications précédentes, **caractérisé en ce que** la feuille de matière plastique (2, 2', 2") est pourvue d'un revêtement anti-griffes avant sa mise en place dans le moule d'injection.

7. Procédé suivant l'une quelconque des revendications précédentes, **caractérisé en ce que** le fil ou les fils (4) sortent vers l'extérieur par au moins une arête de la vitre (1).

8. Procédé suivant l'une quelconque des revendications précédentes, **caractérisé en ce que** des éléments de contact pour constituer des raccords électriques extérieurs pour le fil ou les fils sont noyés dans la matière plastique lors de l'injection par l'arrière sur la feuille de matière plastique.

9. Procédé suivant l'une quelconque des revendications précédentes, **caractérisé en ce que** des barrettes collectrices sont déposées sur la feuille de matière plastique avant l'injection par l'arrière, en vue de réaliser des raccords électriques extérieurs des fils déposés, et sont électriquement raccordées aux fils.

10. Procédé suivant la revendication 8 ou 9, **caractérisé en ce qu'**en guise d'éléments de contact, des connecteurs à fiches sont enrobés avec la matière plastique par injection, d'une manière telle qu'ils soient accessibles sur la face extérieure de la vitre de matière plastique terminée pour l'enfichage de lignes de raccordement.

11. Procédé suivant l'une quelconque des revendications précédentes, **caractérisé en ce que** la feuille de matière plastique est plus petite que la surface totale de la vitre, de telle sorte que, lors de l'injection par l'arrière, la matière injectée soit injectée sur la paroi du moule à côté de la feuille de matière plastique et forme un prolongement lisse de la face extérieure de la feuille de matière plastique.

12. Procédé suivant l'une quelconque des revendications précédentes, **caractérisé en ce que** la feuille de matière plastique n'est garnie de fils que sur une partie de l'étendue de sa surface.

13. Procédé suivant l'une quelconque des revendications précédentes, **caractérisé en ce que** des fils prévus comme résistances de chauffage sont déposés sur la feuille de matière plastique avec des distances mutuelles de 20 mm au maximum, de préférence de 10 mm au maximum.

14. Vitre de matière plastique (1; 1'; 1") avec un corps de vitre (3), qui est durablement assemblé matériellement, par injection à l'arrière, à une mince feuille de matière plastique (2; 2'; 2") pourvue d'une structure de conducteurs électriques sur une face, dont la surface située à l'opposé de la structure de conducteurs forme une des faces extérieures de la vitre lorsque celle-ci est terminée, **caractérisée en ce que** la structure de conducteurs électriques est formée par au moins un fil métallique (4) posé sur ou dans la surface de la feuille de matière plastique (2; 2'; 2") soumise à l'injection par l'arrière.

15. Vitre de matière plastique suivant la revendication 14, **caractérisée en ce que** la feuille de matière plastique (2') est plus petite que la surface totale de la vitre et **en ce que** la face extérieure de la feuille devient la face extérieure du corps de vitre (3) de façon lisse dans une transition (5).

16. Vitre de matière plastique suivant la revendication 14 ou 15, **caractérisée en ce que** seule une partie de la surface de la feuille de matière plastique (2) est garnie de fils.

17. Vitre de matière plastique suivant l'une quelconque des revendications de produit qui précèdent, **caractérisée en ce qu'**il est prévu sur la seconde face du corps de vitre (3) une autre feuille de matière plastique (2'; 2").

18. Vitre de matière plastique suivant la revendication 17, **caractérisée en ce que** l'autre feuille de matière plastique (2') est également garnie de fils (4) au moins sur une partie de l'étendue de sa surface.

19. Vitre de matière plastique suivant l'une quelconque des revendications de produit qui précèdent, **caractérisée en ce qu'**elle comprend plusieurs feuilles de matière plastique garnies de fil (4), sur une ou sur ses deux faces, les structures de conducteurs respectives formant des éléments fonctionnels électriques distincts.

20. Vitre de matière plastique suivant l'une quelconque des revendications de produit qui précèdent, **caractérisée en ce qu'**au moins une feuille de matière plastique (2") est pourvue d'un revêtement transparent (7) de protection contre la chaleur.

21. Vitre de matière plastique suivant l'une quelconque des revendications de produit qui précèdent, **caractérisée en ce que** ses faces libres sont pourvues d'un revêtement anti-griffes.

22. Vitre de matière plastique suivant l'une quelconque des revendications de produit qui précèdent, **caractérisée en ce que** sa face est recouverte au moins en partie par une couche colorée opaque (6) dans le sens de la vision traversante.

23. Vitre de matière plastique suivant l'une quelconque des revendications de produit qui précèdent, **caractérisée en ce qu'**il est prévu, le long du bord de la face de la vitre, un cadre opaque, qui se compose d'une couche colorée (6) et/ou d'une pièce de forme séparée, assemblée à la face de la vitre.

24. Vitre de matière plastique suivant l'une quelconque des revendications de produit qui précèdent, **caractérisée en ce qu'**une transition (5), située dans sa face extérieure, entre une feuille (2') et le corps de vitre (3) est masquée ou recouverte, dans le sens de la vision traversante, par une couche colorée opaque (6) et/ou par un cadre.

25. Vitre de matière plastique suivant les revendications 22, 23 ou 24, **caractérisée en ce que** la couche colorée opaque est disposée sur la surface de la feuille de matière plastique garnie de fil et située à l'intérieur.

## Claims

1. A process for manufacturing a plastic pane provided with embedded electrical conductors, in particular a window pane, in which the conductors are joined to a surface of a thin plastic sheet (2;2';2"), which subsequently receives, by injection molding via the rear, another layer of plastic for the purpose of forming a pane body (3), in which process the material of the plastic sheet and the injected plastic are directly joined together physically, and in which that surface of the plastic sheet which is located on the opposite side from the conductors forms one of the outer faces of the finished pane, **characterized in that** the electrical conductors are formed by furnishing with at least one metal wire (4) that surface of the plastic sheet which is to be exposed to the rear injection molding.

2. The process as claimed in claim 1, **characterized in that** the wire or wires are at least partly impressed into the surface of the plastic sheet by the action of heat.

3. The process as claimed in claim 1 or 2, **characterized in that** the wire or wires are applied to or extended over the surface of the plastic sheet in the injection-molding mold.

4. The process as claimed in any one of the preceding claims, **characterized in that** a thermoplastic sheet with a thickness of between 0.1 and 1 mm is used.

5. The process as claimed in any one of the preceding claims, **characterized in that** a thermoplastic sheet made of polycarbonate (PC) or polymethyl methacrylate (PMMA) is used.

6. The process as claimed in any one of the preceding claims, **characterized in that** the plastic sheet (2, 2', 2") is provided with a scratch-resistant coating before said sheet is placed in the injection-molding mold.

7. The process as claimed in any one of the preceding claims, **characterized in that** the wire or wires (4) emerge into the outside via at least one edge of the pane (1).

8. The process as claimed in any one of the preceding claims, **characterized in that** contact elements for making external electrical connections for the wire or wires are embedded in the plastic during injection molding, via the rear, onto the plastic sheet.

9. The process as claimed in any one of the preceding claims, **characterized in that** busbars are deposited on the plastic sheet before the injection molding via the rear, for the purpose of producing external electrical connections for the deposited wires, and are electrically connected to the wires.

10. The process as claimed in claim 8 or 9, **characterized in that** plug-connectors, as contact elements, are embedded with the plastic by injection molding, in such a way that they are accessible on the outer face of the finished plastic pane in order for connection lines to be plugged in.

11. The process as claimed in any one of the preceding claims, **characterized in that** the plastic sheet is of smaller area than the total area of the pane, in such a way that, during injection molding via the rear, the injected material is injected onto the wall of the mold alongside the plastic sheet and forms a smooth extension of the outer face of the plastic sheet.

12. The process as claimed in any one of the preceding claims, **characterized in that** the plastic sheet is furnished with wires only on one part of the area of its surface.

13. The process as claimed in any one of the preceding claims, **characterized in that** wires provided as resistance heating elements are deposited on the plastic sheet mutually separated by distances of at most 20 mm, preferably at most 10 mm.

14. A plastic pane (1, 1', 1") with a pane body (3), which is physically joined, lastingly, by rear injection molding, to a thin plastic sheet (2, 2', 2") that is provided with an electrical conductor structure on one face, that surface of which, located on the opposite side from the conductor structure, forms one of the outer faces of the pane when the latter is finished, **characterized in that** the electrical conductor structure is formed by at least one metal wire (4) laid on or **in that** surface of the plastic sheet (2, 2', 2") which is subjected to the injection molding via the rear.

15. The plastic pane as claimed in claim 14, **characterized in that** the plastic sheet (2') is of smaller area than the total area of the pane and **in that** the outer face of the sheet becomes, in a smooth manner, the outer face of the pane body (3) in a transition (5).

16. The plastic pane as claimed in claim 14 or 15, **characterized in that** only part of the surface of the plastic sheet (2) is furnished with wires.

17. The plastic pane as claimed in any one of the preceding product claims, **characterized in that** another plastic sheet (2', 2") is provided on the second face of the pane body (3).

18. The plastic pane as claimed in claim 17, **characterized in that** the other plastic sheet (2') is also furnished with wires (4) over at least part of the area of its surface.

19. The plastic pane as claimed in any one of the preceding product claims, **characterized in that** it comprises several plastic sheets furnished with wire (4), on one or both its faces, the respective conductor structures forming separate electrical functional elements.

20. The plastic pane as claimed in any one of the preceding product claims, **characterized in that** at least one plastic sheet (2") is provided with a transparent heat protection coating (7).

21. The plastic pane as claimed in any one of the preceding product claims, **characterized in that** its free faces are provided with a scratch-resistant coating.

22. The plastic pane as claimed in any one of the preceding product claims, **characterized in that** its face is covered at least partly with an opaque colored layer (6) in the direction of through-vision.

23. The plastic pane as claimed in any one of the preceding product claims, **characterized in that** an opaque frame is provided along the edge of the face of the pane, which frame is composed of a colored layer (6) and/or of a separate shaped piece joined to the face of the pane.

24. The plastic pane as claimed in any one of the preceding product claims, **characterized in that** a transition (5), located in its outer face, between a sheet (2') and the pane body (3) is masked or covered, in the direction of through-vision, by an opaque colored layer (6) and/or by a frame.

25. The plastic pane as claimed in claims 22, 23 or 24, **characterized in that** the opaque colored layer is placed on that surface of the plastic sheet which is furnished with wire and located on the inside.

## Patentansprüche

1. Verfahren zur Herstellung einer Kunststoffscheibe, insbesondere einer Fensterscheibe, die mit eingebetteten elektrischen Leitern versehen ist und in welcher die Leiter mit der Oberfläche einer dünnen Kunststofffolie (2; 2'; 2") verbunden sind, die später durch Hinterspritzen eine weitere Kunststoffschicht erhält, um einen Scheibenkörper (3) zu bilden, in welchem das Material der Kunststofffolie und der spritzgegossene Kunststoff materiell direkt miteinander verbunden sind, und in welchem die Oberfläche der Kunststofffolie, die sich abgewandt von den Leitern befindet, eine der Außenseiten der fertigen Scheibe bildet, **dadurch gekennzeichnet, dass** die elektrischen Leiter gebildet werden, indem die Oberfläche der Kunststofffolie, die dem Hinterspritzen auszusetzen ist, mit mindestens einem Metalldraht (4) versehen wird.

2. Verfahren nach Anspruch 1, **dadurch gekennzeichnet, dass** der/die Draht/Drähte in die Oberfläche der Kunststofffolie unter Einwirkung von Wärme wenigstens teilweise hineingedrückt wird/werden.

3. Verfahren nach Anspruch 1 oder 2, **dadurch gekennzeichnet, dass** der/die Draht/Drähte auf die Oberfläche der Kunststofffolie im Spritzgießwerkzeug aufgebracht oder ausgestreckt wird/werden.

4. Verfahren nach einem der vorhergehenden Ansprüche, **dadurch gekennzeichnet, dass** eine thermoplastische Kunststofffolie mit einer Dicke von 0,1 bis 1 mm verwendet wird.

5. Verfahren nach einem der vorhergehenden Ansprüche, **dadurch gekennzeichnet, dass** eine thermoplastische Kunststofffolie aus Polycarbonat (PC) oder Polymethylmethacrylat (PMMA) verwendet wird.

6. Verfahren nach einem der vorhergehenden Ansprüche, **dadurch gekennzeichnet, dass** die Kunststofffolie (2, 2', 2") vor ihrer Anordnung im Spritzgießwerkzeug mit einer kratzfesten Beschichtung versehen wird.

7. Verfahren nach einem der vorhergehenden Ansprüche, **dadurch gekennzeichnet, dass** der/die Draht/Drähte (4) die Glasscheibe (1) durch mindestens eine Kante verlässt/verlassen.

8. Verfahren nach einem der vorhergehenden Ansprüche, **dadurch gekennzeichnet, dass** während des Hinterspritzens auf die Kunststofffolie, um für den/die Draht/Drähte äußere elektrische Anschlüsse zu bilden, Kontaktelemente in den Kunststoff eingebettet werden.

9. Verfahren nach einem der vorhergehenden Ansprüche, **dadurch gekennzeichnet, dass,** um für die aufgebrachten Drähte äußere elektrische Anschlüsse zu bilden, vor dem Hinterspritzen Sammelschienen auf die Kunststofffolie aufgebracht und mit den Drähten elektrisch verbunden werden.

10. Verfahren nach Anspruch 8 oder 9, **dadurch gekennzeichnet, dass** anstelle von Kontaktelementen Steckverbinder durch Spritzgießen mit Kunststoff derart umhüllt werden, dass sie auf der Außenseite der fertigen Kunststoffscheibe für das Stecken von Anschlussleitungen zugänglich sind.

11. Verfahren nach einem der vorhergehenden Ansprüche, **dadurch gekennzeichnet, dass** die Kunststofffolie kleiner als die Gesamtfläche der Glasscheibe derart ist, dass während des Hinterspritzens der aufgespritzte Kunststoff auf die Wand des Werkzeugs neben der Kunststofffolie aufgespritzt wird und eine glatte Verlängerung der Aussenseite der Kunststofffolie bildet.

12. Verfahren nach einem der vorhergehenden Ansprüche, **dadurch gekennzeichnet, dass** die Kunststofffolie nur auf einem Teil des Ausmaßes ihrer Fläche mit Drähten versehen wird.

13. Verfahren nach einem der vorhergehenden Ansprüche, **dadurch gekennzeichnet, dass** auf der Kunststofffolie als Heizdrähte vorgesehene Drähte mit gegenseitigen Abständen von höchstens von 20 mm und vorzugsweise höchstens 10 mm aufgebracht werden.

14. Kunststoffscheibe (1; 1'; 1") mit einem Scheibenkörper (3), der durch Hinterspritzen mit einer dünnen Kunststofffolie (2; 2'; 2") dauerhaft materiell verbunden ist, die mit einer elektrischen Leitungsstruktur auf einer Seite versehen ist, deren Oberfläche, die der Leitungsstruktur abgewandt ist, eine Außenseite der Scheibe bildet, wenn diese fertig ist, **dadurch gekennzeichnet, dass** die elektrische Leitungsstruktur von mindestens einem Metalldraht (4) gebildet wird, der auf oder in der Oberfläche der Kunststofffolie (2; 2', 2") angebracht ist, die dem Hinterspritzen unterworfen worden ist.

15. Kunststoffscheibe nach Anspruch 14, **dadurch gekennzeichnet, dass** die Kunststofffolie (2') kleiner als die Gesamtfläche der Kunststoffscheibe ist, und dass die Außenseite der Folie die Außenseite des Scheibenkörpers (3) in einem Übergang (5) auf glatte Weise wird.

16. Kunststoffscheibe nach Anspruch 14 oder 15, **dadurch gekennzeichnet, dass** nur ein Teil der Oberfläche der Kunststofffolie (2) mit Drähten versehen ist.

17. Kunststoffscheibe nach einem der vorhergehenden Erzeugnisansprüche, **dadurch gekennzeichnet, dass** auf der zweiten Seite des Scheibenkörpers (3) eine weitere Kunststofffolie (2'; 2") vorgesehen ist.

18. Kunststoffscheibe nach Anspruch 17, **dadurch gekennzeichnet, dass** die andere Kunststofffolie (2') ebenfalls auf wenigstens einem Teil des Ausmaßes ihrer Fläche mit Drähten (4) versehen ist.

19. Kunststoffscheibe nach einem der vorhergehenden Erzeugnisansprüche, **dadurch gekennzeichnet, dass** sie auf einer Seite oder auf beiden Seiten mehrere mit Drähten (4) versehene Kunststofffolien umfasst, wobei die jeweiligen Leitungsstrukturen unterschiedliche elektrische Funktionselemente bilden.

20. Kunststoffscheibe nach einem der vorhergehenden Erzeugnisansprüche, **dadurch gekennzeichnet, dass** mindestens eine Kunststofffolie (2") mit einer transparenten Beschichtung (7) zum Schutz vor Wärme versehen ist.

21. Kunststoffscheibe nach einem der vorhergehenden Erzeugnisansprüche, **dadurch gekennzeichnet, dass** ihre freien Seiten mit einer kratzfesten Beschichtung versehen sind.

22. Kunststoffscheibe nach einem der vorhergehenden Erzeugnisansprüche, **dadurch gekennzeichnet, dass** ihre Seite wenigstens teilweise mit einer in Durchsichtsrichtung opaken Farbschicht (6) beschichtet ist.

23. Kunststoffscheibe nach einem der vorhergehenden Erzeugnisansprüche, **dadurch gekennzeichnet, dass** entlang des Randes der Seite der Scheibe ein opaker Rahmen vorgesehen ist, der sich aus einer Farbschicht (6) und/oder einem getrennten Formteil, das mit der Seite der Scheibe verbunden ist, zusammensetzt.

24. Kunststoffscheibe nach einem der vorhergehenden Erzeugnisansprüche, **dadurch gekennzeichnet, dass** ein Übergang (5), der sich ihrer Außenseite zwischen einer Folie (2') und dem Scheibenkörper (3) befindet, in Durchsichtsrichtung von einer opaken Farbschicht (6) und/oder einem Rahmen verdeckt oder beschichtet wird.

25. Kunststoffscheibe nach den Ansprüchen 22, 23 oder 24, **dadurch gekennzeichnet, dass** die opake Farbschicht auf der Oberfläche der Kunststofffolie angeordnet ist, die mit dem Draht versehen ist und sich im Inneren befindet.
